# EUROPÄISCHE PATENTANMELDUNG

(11) **EP 3 671 193 A1**
(43) Veröffentlichungstag der Anmeldung: **24.06.2020**
(21) Anmeldenummer: 19208554.6
(22) Anmeldetag: 12.11.2019
(51) Int. Cl.: G01N 27/02

(54) **VERFAHREN ZUM ERKENNEN VON DEFEKTEN ODER LÄNGENÄNDERUNGEN AN NADELFÖRMIGEM MESSOBJEKT, VORRICHTUNG ZUR ANWENDUNG DES VERFAHRENS UND LEITERPLATTE ALS BESTANDTEIL DER VORRICHTUNG**

(30) Priorität: 20.12.2018 DE 102018222660
(71) Anmelder: MICRO-EPSILON Messtechnik GmbH & Co. KG, 94496 Ortenburg (DE)
(72) Erfinder: Grömmer, Werner, 94496 Ortenburg (DE); Niederhofer, Christian, 94086 Bad Griesbach (DE); Mednikov, Felix, 94496 Ortenburg (DE); Hofer, Johann, 94496 Ortenburg (DE); Pfaffinger, Christian, 94099 Ruhstorf a. d. Rott (DE)
(74) Vertreter: Patent- und Rechtsanwälte Ullrich & Naumann

(57) **Zusammenfassung**

Bei einem Verfahren zum Erkennen von Defekten oder Längenänderungen an einem nadelförmigen oder nadelähnlichen Messobjekt, insbesondere an Nadeln in einer mehrere Nadeln umfassenden Anordnung, vorzugsweise an Nadeln in Pökelinjektoren, werden die Messobjekte während einer Relativbewegung zwischen den Messobjekten und Sensoren kontaktlos überprüft. Die Sensoren sind als Spulen oder Spulenanordnungen ausgeführt. Der Überprüfung werden Messsignale zugrunde gelegt, die aus einer im Bewegungsablauf auftretenden Änderung der Spuleneigenschaft resultieren.

## Beschreibung

Die Erfindung betrifft ein Verfahren zum Erkennen von Defekten oder Längenänderungen an einem nadelförmigen oder nadelähnlichen Messobjekt, insbesondere an Nadeln in einer mehrere Nadeln umfassenden Anordnung, vorzugsweise an Nadeln in Pökelinjektoren, wobei die Messobjekte während einer Relativbewegung zwischen den Messobjekten und Sensoren kontaktlos überprüft werden und wobei die Sensoren als Spulen oder Spulenanordnungen ausgeführt sind.

Des Weiteren betrifft die Erfindung eine Vorrichtung zur Nutzung des Verfahrens sowie eine Leiterplatte als Bestandteil der Vorrichtung.

Die Erfindung bezieht sich grundsätzlich auf das Erkennen von Defekten oder Längenänderungen an nadelförmigen oder nadelähnlichen Messobjekten, wobei die Messobjekte aus unterschiedlichen Materialien hergestellt sein können.

Es gibt zahlreiche aus der Praxis bekannte Anwendungen, bei denen eine automatisierte Prüfung von nadelförmigen oder nadelähnlichen Objekten erforderlich ist. Beispielsweise in der Elektronikherstellung werden Nadelbetttester eingesetzt, um bestückte Platinen zu prüfen. Eine Anordnung von Nadeln, die federnd gelagert sind, wird dabei mittels einer Bewegungsvorrichtung auf die zu testende Platine gedrückt. Die Nadeln sind leitfähig, so dass an den durch das Layout der Platine festgelegten Messpunkten Spannungswerte abgegriffen werden können. Somit kann die Platine im Betriebszustand getestet werden (In-circuit-Test). Falls eine Platine nicht korrekt platziert ist, kann eine Nadel abbrechen, weil sie beispielsweise auf ein Bauteil trifft. Dies gilt es festzustellen.

Ein weiteres Anwendungsbeispiel ist das Pipettieren von Flüssigkeiten in der Pharma- oder Medizintechnik. Hier wird eine Anordnung von Hohlnadeln verwendet, um Flüssigkeiten in miniaturisierte Behälter (zum Beispiels Reagenzgläser) zu füllen. Falls eine Nadel durch Kollision abbricht, kann die Spitze in den Behälter fallen und die Probe zerstören.

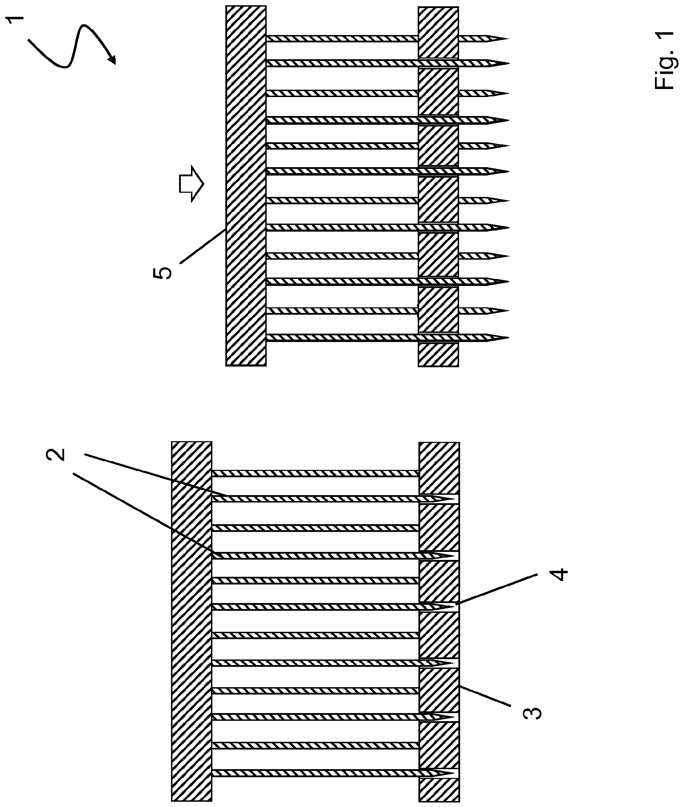

Zum Pökeln in der Lebensmittelverarbeitung werden Hohlnadeln verwendet, um eine Salzlösung in das Pökelgut zu injizieren. Figur 1 zeigt den schematischen Aufbau einer solchen Injektionsvorrichtung 1 für Pökelgut mit einer Anordnung von Nadeln, wie sie beispielhaft aus der DE 10 2015 113 377 B4 bekannt ist. Im Konkreten ist dort eine Vielzahl von Nadeln 2 ein- oder mehrreihig in einer Nadelbrücke 5 angeordnet. In einem Niederhalter 3, der zum Fixieren des Pökelguts beim Injektionsvorgang dient, sind Durchgänge 4 eingearbeitet. Sobald das in der Figur nicht gezeigte Pökelgut fixiert ist, werden die Nadeln 2 durch den Niederhalter 3 mittels einer Bewegungsvorrichtung in das Pökelgut gestoßen und es kann eine Pökelsalzlösung in das Pökelgut injiziert werden.

Im Betrieb kann es beispielsweise durch Abnutzung zu Beschädigungen der Nadeln kommen. Auch ist es denkbar, dass einzelne Nadel auf einen Knochen treffen und brechen. Es besteht die Gefahr, dass die Nadel im Pökelgut stecken bleibt. DE 10 2015 113 377 B4 beschreibt unterschiedliche Ansätze, wie mittels Sensorik eine Beschädigung oder gar ein Bruch der Nadel wie auch eine Verstopfung der Nadel detektierbar ist.

Da die beim Pökeln verwendeten Nadeln regelmäßig aus nichtrostendem Stahl bestehen, aber nicht zwingend ferromagnetisch sind, und beim Pökeln mit unterschiedlichen Umgebungsbedingungen im Messumfeld aufgrund unterschiedlicher Veredelungsflüssigkeiten zu rechnen ist, ist eine optische oder kapazitive Messung nicht geeignet, wie sie aus DE 10 2015 113 377 B4 bekannt ist.

Bei dem in DE 10 2015 113 377 weiter beschriebenen Ansatz mit einem auf dem LVDT-Prinzip basierenden Sensor ergibt sich der Nachteil, dass umfänglich um die Nadeln stets drei Spulen (eine Primärspule und zwei Sekundärspulen) anzuordnen sind. Der eigentliche Vorteil des LVDT-Prinzips wird dabei gerade nicht genutzt, da die Nadel stets länger ist als der Sensor. So sollte beim LVDT-Prinzip die Kopplung von Primär- auf die erste Sekundärseite in dem Maße zunehmen, wie die Kopplung auf die zweite Sekundärseite abnimmt. Im Falle des Nadelbruchs wird jedoch die Nadel vom freien Ende her kürzer, was zur Folge hat, dass sich die Kopplung nur zu einer der beiden Sekundärspulen verändert. Vorteile des differentiellen Aufbaus einer entsprechenden Messung können so offensichtlich nicht genutzt werden und rechtfertigen daher nicht den komplexen Aufbau eines nach dem LVDT-Prinzip arbeitenden Sensors.

Der vorliegenden Erfindung liegt daher die Aufgabe zugrunde, ein Verfahren anzugeben, welches mit einfachen Mitteln eine sichere Erkennung von Defekten oder Längenänderungen an einem nadelförmigen oder nadelähnlichen Messobjekt ermöglicht. Außerdem soll eine entsprechende Vorrichtung angegeben werden. Gleiches gilt für eine dabei zum Einsatz kommende Leiterplatte.

Erfindungsgemäß ist die voranstehende Aufgabe durch die Merkmale des Anspruchs 1 gelöst. Danach ist das erfindungsgemäße Verfahren dadurch gekennzeichnet, dass der Überprüfung Messsignale zugrunde gelegt werden, die aus einer im Bewegungsablauf auftretenden Änderung der Spuleneigenschaft resultieren.

In Bezug auf die erfindungsgemäße Vorrichtung wird die voranstehende Aufgabe durch die Merkmale des nebengeordneten Anspruchs 13 gelöst, wobei die Vorrichtung dadurch gekennzeichnet ist, dass der Überprüfung Messsignale zugrunde gelegt werden, die aus einer im Bewegungsablauf auftretenden Änderung der Spuleneigenschaft resultieren, wobei zur Messung an einem Messobjekt eine, zwei oder mehrere Spulen vorgesehen sind.

In Bezug auf die erfindungsgemäße Leiterplatte ist die vorliegende Erfindung durch die Merkmale des weiter nebengeordneten Anspruchs 18 gelöst, wonach die Spulen in die Leiterplatte integriert sind.

Es gibt nun verschiedene Möglichkeiten, die Lehre der vorliegenden Erfindung in vorteilhafter Weise auszugestalten und weiterzubilden. Dazu ist einerseits auf die zu den nebengeordneten Ansprüchen abhängigen Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht, vereinfacht und geschnitten, den grundsätzlichen Aufbau einer herkömmlichen Injektionsvorrichtung für Pökelgut,
- Fig. 2: in einem schematischen Diagramm den zeitlichen Verlauf des Messsignals im Bewegungsablauf der Nadeln,
- Fig. 3: in einem schematischen Diagramm den Signalverlauf über die Position der Nadelspitze,
- Fig. 4: in schematischen Ansichten unterschiedliche Möglichkeiten der Anordnung der Spulen,
- Fig. 5: in schematischen Ansichten Ausgestaltungsvarianten der Spule/ Spulenanordnung relativ zum Messobjekt,
- Fig. 6: in einem schematischen Blockschaltbild die beispielhafte Anordnung einer mehrere Spulen umfassenden Untereinheit,
- Fig. 7: in einem schematischen Blockschaltbild die beispielhafte Anordnung einer Untereinheit gemäß Figur 6 nebst zentraler Einheit und Versorgungsleitungen,
- Fig. 8: in einem schematischen Blockschaltbild die Verschaltung jeweils zweier Spulen mit gemeinsamem Anschluss an einen Multivibrator,
- Fig. 9: in einer schematischen Ansicht, ausschnittsweise, die Anordnung streifenförmiger Spulenarrays mit mehreren Spulen auf einer Leiterplatte,
- Fig. 10: in einer schematischen Ansicht eine Anordnung wie gemäß Figur 9, wobei die zu detektierenden Nadeln sehr nah bei einander stehen und entsprechend die Spulen durch Wölbung eines flexiblen Bereichs der Leiterplatte aneinander gerückt sind und
- Fig. 11: in einer schematischen Ansicht das Spulenarray teilweise, wobei die Spule durch zwei oder mehrere Teilspulen durch Übereinanderklappen gebildet ist.

Die erfindungsgemäße Lehre beruht auf der Erkenntnis, nicht nur einzelne Messstellen als Entscheidungsgrundlage für das Erkennen eines Defektes heranzuziehen, sondern durch die Auswertung von mehreren Messstellen ein wirkungsvolleres und flexibleres Verfahren zu realisieren. Durch den Verlauf einer Kennlinie über die Zeit oder die Position des Messobjektes relativ zur Messstelle ergibt sich eine weitere Dimension in der Messstellenmatrix.

Wenn als Abtastmittel eine Spule oder eine Spulenanordnung verwendet wird, um an bzw. in einzelnen Messstellen Veränderungen an Messobjekten bzw. an Nadeln zu erkennen, so kann aufgrund der Änderung der Spuleneigenschaften wie zum Beispiel der Induktivität und/oder des Widerstands auf eine Veränderung im bzw. am Messobjektes geschlossen werden.

Für den Fall, dass die Messobjekte in einer größeren Stückzahl gleichzeitig und gleichförmig bewegt werden und die Spulenanordnung so gewählt ist, dass die Messobjekte die Spulen jeweils so passieren können, dass jedes Messobjekt während der Bewegung an der Spulenanordnung vorbei oder durch die Spulenanordnung hindurchgeführt wird, bis mindestens der zu erwartende Defekt oder sogar das Ende des Messobjektes erreicht und gemessen werden kann, ist eine vergleichende Auswertung unter Berücksichtigung des zeitlichen Verlaufes der Spuleneigenschaft ein zielführendes Verfahren.

Konkret bedeutet dies, dass über Schaltungstechnik die Spuleneigenschaften auf eine messbare Größe abgebildet und zur weiteren Verarbeitung zur Verfügung gestellt werden. Für den angesprochenen Fall der gleichzeitigen und gleichförmigen Bewegung aller Messobjekte kann nun entweder der zeitliche Verlauf der Einzelmessungen direkt mit- und zueinander verglichen und eine zusätzliche Abweichung einer oder weniger Messstellen im Vergleich zu den anderen sofort zur Erkennung des Defektes genutzt werden. Dieser Fall unterstellt eine Messung, deren zeitliche Anforderung direkt von der Bewegungsgeschwindigkeit und der Größe des zu detektierenden Defektes abhängt. Einzelpunkte der Kennlinien werden kontinuierlich oder mindestens in einem solchen zeitlichen Raster festgestellt, das ausreichend ist, um einen Defekt eindeutig vom Ende der Messobjekte unterscheiden zu können, also zum Beispiel der Defekt im Vergleich zum Messobjektende früher erkennbar ist. Im Allgemeinen stellt diese Methode ein sehr effizientes Verfahren dar, da die Messung über die Zeit bzw. den Zeitversatz sehr genau ist und auch hoch integriert erfolgen kann. Für diesen Ansatz gilt, dass die Anzahl der Messpunkte bzw. die zeitliche Rasterung in der spezifisch für die jeweilige Messung und vor allem für die dortigen Randbedingungen gewählt werden muss, um eine sichere Unterscheidung zwischen Defekt und Messobjektende sicherzustellen.

Eine daraus abgeleitete Möglichkeit ist, den Kennlinienverlauf in einem für alle Messungen geltendem Zeitfenster mit möglichst gleicher Anzahl der Messwerte pro Messpunkt aufzunehmen, abzuspeichern und dann anschließend eine vergleichende Bewertung durchzuführen. In diesem Fall muss eine Entscheidung oder abgeleitete Aktion nicht zur Laufzeit getroffen werden. Ein gewisses Maß an zeitlicher Verzögerung zwischen den Messpunkten ist unkritisch, solange sichergestellt ist, dass eine sichere Unterscheidung zwischen Defekt und Messobjektende erreicht wird. Ein Vorteil ist dann, dass bei komplexeren Vergleichsoperationen die Anforderung an eine dafür vorgesehene Rechen- oder Bewertungseinheit deutlich geringer formuliert werden können. Dies gilt vor allem, wenn nach der Bewegung noch Verrechnungszeit zur Verfügung steht. In der konkreten Anwendung ist dies der Fall, da das Pökelgut einzeln vorliegt und in einer entsprechenden Maschine erst das nächste Teil nachgefördert werden muss, bevor ein weiterer Bearbeitungsdurchlauf erfolgt und ein Messdurchlauf nötig ist.

Als weitere Vereinfachung des zuvor erörterten Verfahrens kann mit Kenntnis der Position bzw. der Zeit, nach der die Messwerte eines Defektes zu erwarten sind, die Anzahl der Messpunkte während der Bewegung verringert werden. Wenn für die Messung die Bewegung unterbrochen wird, kann auch die Anforderung an die Schaltungstechnik und Auswerteelektronik deutlich reduziert werden.

So können zum Beispiel drei Messpunkte an jeder Messstelle genügen, beispielsweise ein Messpunkt bei eingetauchter Nadel und zwei im Bereich des zu erwartenden Defektes.

Eine extreme Vereinfachung der beanspruchten Lehre ist gleichzeitig die schnellste und günstigste Variante, nämlich nur noch in einem Punkt zu messen. Die vergleichende Betrachtung der Einzelmesspunkte zueinander bleibt mit all den Vorteilen bestehen. Voraussetzung ist, dass die Messung im Bereich der zu erwartenden Defektstelle durchgeführt wird.

Ein zusätzliches Bewertungskriterium ist gerade in diesem Fall der zusätzliche Vergleich bzw. die Feststellung der Veränderung bezüglich der vorangegangenen Messungen in einer Messstelle. So ist zum Beispiel aus vorangegangenen Messungen bekannt, welche Messwerte in den einzelnen Messstellen bisher festgestellt worden sind. Bei der aktuellen Messung liegen zum Beispiel bis auf eine Messstelle die Messwerte innerhalb vorher festgelegter zulässiger Messwertabweichungen. Damit kann auf einen Defekt an der auffälligen Messstelle geschlossen werden.

Das Einbeziehen der vergangenen Messwerte ist aber nicht nur für die Messung in einem Punkt, sondern für das ganze Verfahren von Bedeutung, wenn der direkte Vergleich für die Beurteilung nicht ausreichend ist.

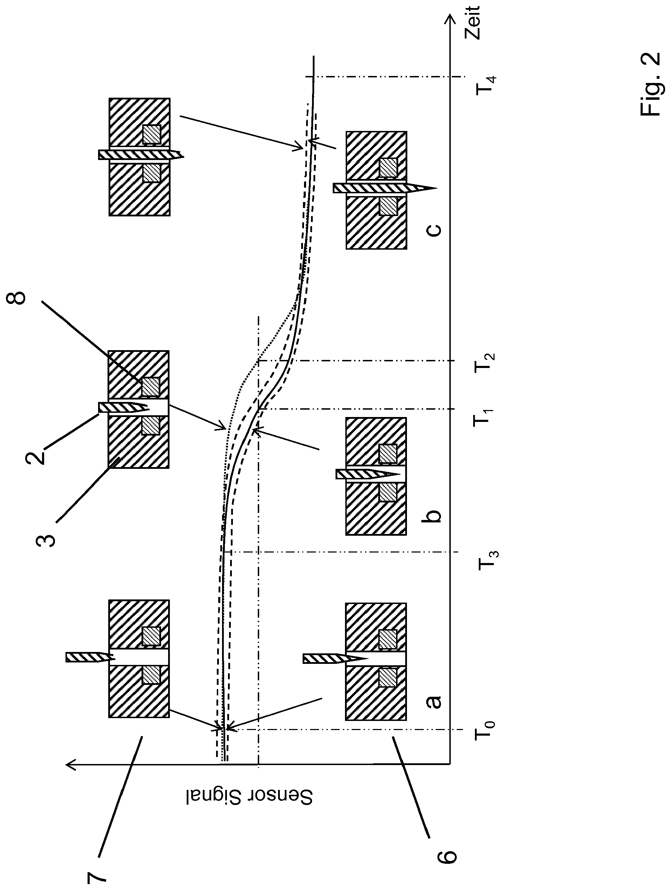

In Figur 2 wird der zeitliche Verlauf des Signals in einer idealisierten Darstellung gezeigt.

In einer ersten Ausprägung wird zunächst der zeitliche Verlauf bei Betrachtung nur einer Messstelle 8 beschrieben.

Die Durchgezogene Linie repräsentiert dabei den Mittelwert über mehrere zeitlich aufeinanderfolgende Messungen an einer Messstelle. Die gestrichelten Linien darüber und darunter stellen die Schwankungsbreite der Einzelmessungen dar. Zur Verdeutlichung ist in der unteren Hälfte 6 der Figur 2 an drei Stellen der Kennlinie die dazugehörige Position einer unbeschädigten Nadel relativ zur Spule gezeigt.

Zunächst befindet sich die Nadel 2 oberhalb der Spule 8 komplett im Niederhalter 3 zurückgezogen (a). Das Signal entspricht einem Anfangswert zu einem Zeitpunkt T₀, wo die Spule nicht durch die Nadel beeinflusst wird. Bewegt sich die Nadel nun nach unten, durchfährt die Nadelspitze die Spule (b), wobei sich das Signal ändert. Sobald die Nadel vollständig durch die Spule hindurchgetreten ist, stellt sich als Endwert ein annähernd stationäres Signal ein (c), da die Nadel vollständig in die Spule eingetaucht ist.

Analog dazu ist in der oberen Hälfte 7 von Figur 2 der Fall einer Nadel mit abgebrochener Spitze gezeigt. Das zugehörige Signal ist mit der gepunkteten Linie dargestellt. Zunächst entspricht das Signal dem Anfangswert, wonach die Spule auch durch die Nadel mit abgebrochener Spitze nicht beeinflusst wird. Bewegt sich die Nadel nach unten, taucht die abgebrochene Spitze zeitverzögert in die Spule ein, das Signal bleibt zunächst auf einem höheren Niveau. Sobald die Nadel vollständig in die Spule eingetaucht ist, entspricht das Signal wieder dem Endwert der unbeschädigten Nadel.

Zur Auswertung kann nun der Übergangsbereich verwendet werden, wenn gerade die Nadelspitze die Spule passiert. In Figur 2 sind beispielhaft zwei Zeitpunkte T₁ und T₂ gekennzeichnet, die den Unterschied zwischen unbeschädigter und beschädigter Nadel repräsentieren.

Die Darstellung zeigt den allgemeinen Vorgang, wenn sich die Nadel aus einer Position außerhalb der Spule vollständig durch die Spule hindurchbewegt. Wird die Nadel nicht völlig an der Abtasteinrichtung bzw. Sensor hindurch- bzw. vorbeigeführt, wird die Kennlinie nicht vollständig durchlaufen. Die Auswertung startet dann zu einem anderen Zeitpunkt, beispielsweise T₃.

In einer zweiten Ausführung kann anstelle der zeitlich aufeinanderfolgenden Betrachtung nur einer Messstelle auch die gleichzeitige Betrachtung einer Vielzahl von Messstellen ausgewertet werden. Die Vielzahl von Messstellen kann entweder die gesamte Matrixanordnung von Nadeln betreffen, oder nur Gruppen davon. Analog zur obigen Betrachtung wird dabei der Mittelwert des Signals über die Vielzahl von Messstellen gebildet, und jede einzelne Messstelle mit dem Mittelwert verglichen. Weicht das Signal bzw. der Signalverlauf vom Mittelwert ab (ggf. auch von einer festgelegten Schwankungsbreite), kann dadurch eine beschädigte Nadel detektiert werden.

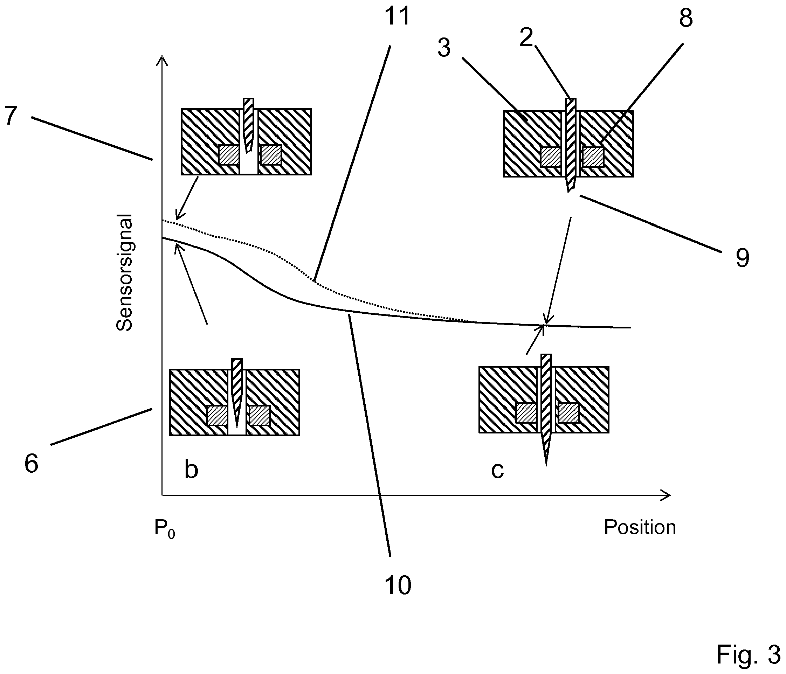

Alternativ kann anstatt des zeitlichen Verlaufs der Messsignale die Position der Nadelspitze 9 relativ zur Spule 8 ausgewertet werden. Figur 3 zeigt entsprechend den Signalverlauf über die Position der Nadelspitze.

Bei vorteilhafter Anordnung lässt sich der Bruch bereits in der "Ruhelage" P₀, wenn sich die Nadel im Niederhalter befindet, durch einen Vergleich feststellen. Die durchgezogene Kurve 10 entspricht dabei analog zu obigem Verfahren (i) entweder dem Mittelwert aus vorherigen Messwerten, oder (ii) dem Mittelwert der Messungen aller oder nur einer Gruppe von Nadeln. Für die Auswertung können auch beide Informationen herangezogen bzw. kombiniert werden. Entsprechend zeigt die gepunktete Kurve 11 die Messung an einer defekten Nadel in derselben Position oder entsprechend zur selben Zeit relativ zum Mittelwert.

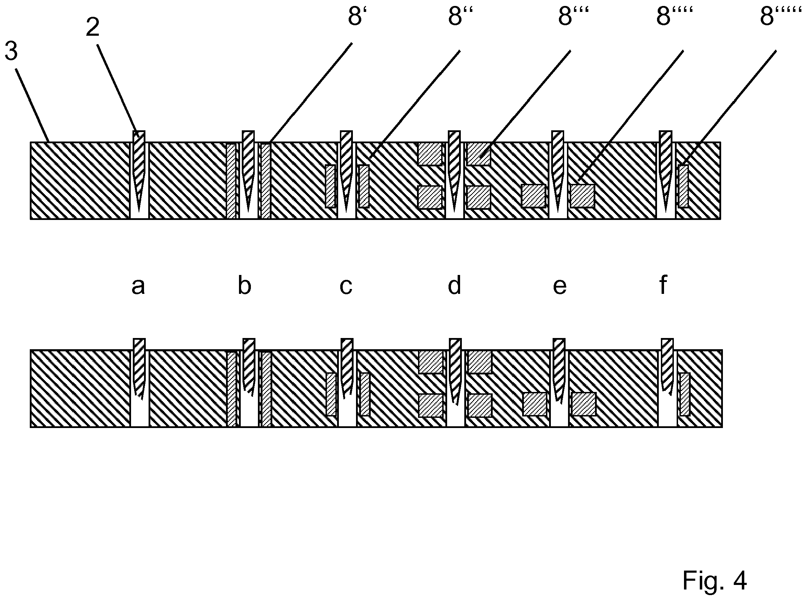

Figur 4 zeigt beispielhaft die verschiedenen Möglichkeiten der Anordnung der Spulen 8'. 8", 8"', 8"". 8""' im Niederhalter 3, oben mit unbeschädigter Nadel 2, unten mit Nadeln, deren Spitze abgebrochen ist. Je nach gewählter Auswerteschaltung und ggf. angepasst an die geometrischen Voraussetzungen kann die Anordnung wie folgt aussehen:
a) ohne Spule
b) langgestreckte, gewickelte Spule
c) kurze, gewickelte Spule
d) Zweispulenanordnung
e) konzentrische Flachspule
f) seitlich angeordnete Flachspule.

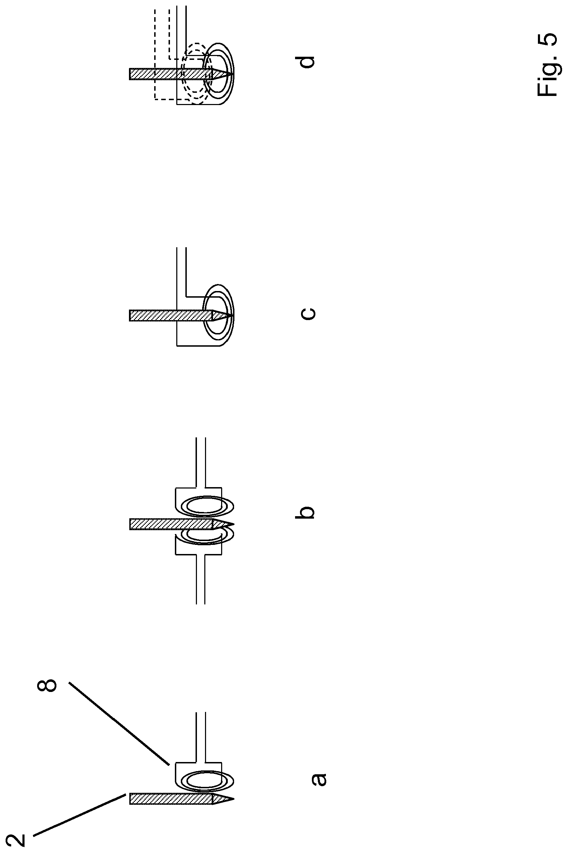

Figur 5 zeigt im Detail die Ausgestaltung von Spulenanordnungen relativ zur Nadel:
a) seitliche Messung an den Einzelnadeln, die den Vorteil hat, dass der Abstand zu den Nadeln nicht vom Nadeldurchmesser abhängig ist.
b) seitliche Messung an zwei Seiten der Einzelnadel, die neben dem genannten Vorteil auch noch eine gewisse Unabhängigkeit bezüglich des Nadelschliffes und der Nadelöffnungen bietet.
c) Nadel dringt durch die Spulenmitte. Hier ergibt sich entweder ein relativ großer Abstand zum Messobjekt bei gleichbleibender Spulengeometrie oder eine Variation der Spulengeometrie abhängig vom Durchmesser des zu messenden Messobjektes.
d) Nadel dringt durch die Spulenmitte von mehr als einer Spule. Abhängig von der Beschaltung ergibt sich hier eine günstigere Ortsauflösung des Gesamtsensors.

Um das genannte Verfahren in der Anwendung wirtschaftlich, störsicher und ausfallsicher zu gestalten, sind folgende Vorrichtungen nebst Ausführungen von Vorteil:
Zur Reduktion des Schaltungsaufwands bei einer größeren Anzahl von Messstellen, können alle Sensoreinheiten gleichzeitig oder in Gruppen betrieben und die jeweiligen Ausgänge über einen Multiplexer umschaltbar der zentralen Auswerteeinheit (oder auch der Steuereinheit) zur Verfügung gestellt werden. Dieser Fall erscheint sinnvoll, wenn die Abstände zwischen den einzelnen Sensoreinheiten groß genug gewählt werden können, um ein Übersprechen bzw. gegenseitiges Beeinflussen zu minimieren.

Ist das nicht der Fall, erscheint eine andere, schaltungstechnisch aufwändigere Anordnung zielführend. Hier könnten die Sensorspulen einzeln oder zusammen mit Wechselstrom betrieben werden und könnte der sich ändernde Spannungsabfall aufgrund der Beeinflussung des Messobjektes über einen Multiplexer zu einer Untereinheit geführt und dort über einen AD-Wandler zur weiteren Verarbeitung als Messwert bereitgestellt werden. Der AD-Wandler und die benötigen Verstärkungspfade bzw. Offseteinstellungen müssten den jeweiligen Messobjektanforderungen (zum Beispiel dickere Nadel) nachgeführt, oder es müsste ansonsten auf Auflösung verzichtet werden. Wenn nicht auf Auflösung verzichtet werden soll, kann in einer allgemein gültigen Lösung eine Umsetzung mit entsprechenden Schaltungsteilen wie zum Beispiel durch zusätzliche digitale Potentiometer erfolgen.

Weitere Möglichkeiten ergeben sich durch die Anordnung zweier oder mehrerer Spulen für die Messung an einer Nadel sowohl als seitliche, als auch als "Durch-steck"- Variante. Eine Spule kann als Primär und die zweite und/oder weitere als Sekundärspule(n) benutzt werden. Die Nadel beeinflusst die jeweilige Kopplung. Vorteil ist hier die durch die Windungsverhältnisse einstellbare Kopplung. Vorteilhaft ist dies insbesondere dann, wenn die die Nadeln ferromagnetisch sind, da dann der Einfluss auf die Kopplung durch die Nadeln relativ groß ist.

Aufgrund der großen Leitungslängen, die sich aus der Anforderung im konkreten Einsatz und der damit verbundenen Störanfälligkeit ergeben, sei eine besonders vorteilhafte Ausführung aufgezeigt, die verhindert, dass Sensorrohsignale über längere Strecken geführt werden müssen und Messsignale zumindest gepuffert übertragen werden. Dadurch lassen sich teure geschirmte Kabel o.ä. vermeiden. Die Signalaufbereitung erfolgt in unmittelbarer Umgebung des Sensorelementes, obwohl der zur Verfügung stehende Bauraum aufgrund der unterschiedlichen Stichbildanordnungen der Nadeln stark eingeschränkt ist.

Als Messelement wird mindestens eine Spule verwendet, in die die zu messende Nadel eintaucht, oder seitlich dazu angeordnet ist. Da die Nadeln zwar leitfähig, aber nicht zwingend ferromagnetisch sind, kann die Spulendinduktivität nicht mit Methoden erfasst werden, die den Ferromagnetismus voraussetzen. Die Änderung der Induktivität der Spule, die abhängig von der Position der Nadelspitze oder von der abgebrochenen Nadelspitze ist, wird mit Hilfe des Wirbelstromeffektes hervorgerufen, der sich in der Nadel bildet, wenn sie dem Wechselfeld der Spule ausgesetzt wird. Um dies zu bewerkstelligen, gibt es mehrere Ansätze. Entscheidend für diese Anwendung ist aber, dass die Schaltung für den Betrieb des Wirbelstromsensors ein- und ausschaltbar bzw. zu multiplexen ist, denn ansonsten ist die große Anzahl von Messstellen (bis zu mehreren Hundert je Einheit) nur mit sehr großem Schaltungsaufwand realisierbar.

Eine Ansteuerschaltung, die dies erfüllt und noch weitere Verbesserungen ermöglicht, ist der Ansatz, den Oszillator in unmittelbarer Nähe der Spule anzuordnen. Im konkreten Fall wird dabei mit einem Multivibrator gearbeitet, dessen bestimmende Zeitkonstante hauptsächlich durch die Messspule und einen Widerstand gebildet wird. Der gewählte Schaltungsansatz lässt sich ausschließlich mit Logikgattern aufbauen und kann deshalb leicht mit einem "Enable" oder adressierbaren Eingang versehen werden. Dies ermöglicht ein einfaches Ein- und Ausschalten bzw. ein Durchschalten (Multiplexen) einzelner Oszillatoren und damit auch einzelner Sensoren. Die Wahl des Oszillators als Multivibrator hat noch den weiteren Vorteil, dass die "Anschwingzeit" deutlich unter einer Schwingungsperiode liegt. Dies wirkt sich insbesondere positiv aus, wenn der Oszillator oft ein- und ausgeschaltet wird. Bei einem mit einem LC-Schwingkreis ausgeführten Oszillator wäre das nicht der Fall, da dort ein stabiler Zustand erst nach dem Einschwingen über mehrere Perioden erreicht wird.

Der Multivibrator kann aus einfachen Logikbausteinen aufgebaut werden. Werden separate Logikbausteine verwendet, kann die Induktivität der zu verwendenden Spulen in einem großen Bereich liegen. Er ist sehr variabel im Einsatz und robust im Schwingverhalten. Das Ausgangssignal ist eine Periodendauer, die sich abhängig von der Spuleninduktivität ändert. Dies ist eine Signalform, die im Vergleich zu einer Spannung relativ störsicher übertragen werden kann.

Der vorgestellte Aufbau ermöglicht neben dem Dauerbetrieb aller Oszillatoren nun entweder die einzelnen Multivibratoren gezielt ein- und auszuschalten oder/und auch nur die Ausgänge zu schalten, wodurch sich die Anzahl der Anschlussleitungen reduzieren lässt.

Die minimale Leitungslänge zwischen Spulenanschluss und Oszillator ermöglicht einen störsichereren Betrieb. Dieser kann noch weiter verbessert werden, indem die Störabstrahlung im relevanten Frequenzbereich aufgrund der gegenseitigen Kopplung und auch im Hinblick auf die Störabstrahlung des gesamten Aufbaus deutlich verringert wird. Diese Störungen wären zu erwarten, da die Leitungslängen nach dem Oszillatorausgangssignal relativ lang und die zu übertragenden Frequenzen relativ hoch sind und damit auch die Flanken des Signales relativ steil sein müssen. Zur Minimierung dieser Störungen ist dem jeweiligen Oszillator eine Zähleinheit nachgeschaltet, die als Frequenzteiler dient. Mit der Zähleinheit wird eine bestimmte, frei bestimmbare Anzahl von Signalperioden gezählt, wobei der Ausgangspegel einen definierten Wert, beispielsweise "high", annimmt. Nach der bestimmten Anzahl von Signalperioden wird für die gleiche Anzahl von Signalperioden auf "Low" umgeschaltet und somit die Ausgangssignalperiodendauer vergrößert, wodurch sich die zu übertragende Frequenz verringert. Die Signalflanken können nun ohne großen Qualitätsverlust entsprechen flacher gestaltet werden. Das Übersprechen der Signale auf benachbarte Leitungen geht deutlich zurück und die Störabstrahlung liegt in einem unkritischen Frequenzbereich.

Gemäß weiterer Ausführung bedeutet dies, dass neben den Versorgungsleitungen lediglich eine gemeinsame Signalleitung für alle Oszillator- bzw. Oszillator/Zählereinheiten, sowie eine Möglichkeit der Oszillator- bzw. Oszillator/Zählerauswahl, die zusammen mit der jeweiligen Spule eine Sensoreinheit bilden, verdrahtet werden müssen. Es genügt also eine Signalleitung, auf die jedes Einzelsignal eines Sensors in einer Gruppe aufgeschaltet wird. Durch die Adressierung ist es möglich, die auf der Signalleitung transportierten Signale dem jeweils angewählten Oszillator und damit dem Sensor zuzuordnen. Ist also die Oszillator- bzw. Oszillator/Zählerauswahl über eine zugeordnete Adresse möglich, könnten beispielhaft über drei Adressleitungen acht Sensoreinheiten einzeln eingeschaltet werden. In diesem Fall wären dann insgesamt sechs Leitungen (Versorgung, GND, Signalleitung, Adressleitungen) für acht Sensoreinheiten nötig. Wird auf die Adressierung verzichtet, um evtl. bei der Anzahl der Bausteine bzw. bei der Größe der Bausteine zu sparen, wird bereits mit nur einem "Enable"- bzw. /CS-Eingang (chip select) je Sensoreinheit die Anzahl der Leitungen auf die Anzahl der Sensoreinheiten plus drei (Versorgung + GND + Signalleitung) verringert. Bei acht Messstellen ergäben sich also elf Leitungen.

Da der vorgestellte Schaltungsansatz vollständig mit Logikbausteinen umgesetzt werden kann, ist aufgrund der geringen Platzverhältnisse die Funktionalität in einem programmierbaren Logikbaustein umgesetzt worden. Dies bringt sowohl für den Platzbedarf und auch für den Preis bei großen Stückzahlen erhebliche Vorteile.

Sowohl das mit Hilfe der Zählereinheit geteilte Signal, als auch das direkte Oszillatorsignal können in einer zusammenfassenden Untereinheit oder als Gesamtes von einer zentralen Einheit zusammengefasst und ausgewertet werden. Der Vorteil der Übertragung der Periodendauer oder eines Vielfachen davon liegt darin, dass die benötigte Auflösung des Messwertes über den gewählten Vergleichs-Oszillator in der Untereinheit bestimmt werden kann. So kann hier die Frequenzstabilität und auch die absolute Frequenz entsprechend den Anforderungen gewählt werden. Es gibt keine Begrenzung des Hubes bzw. eine Vorauswahl der gewünschten Auflösung eines AD-Wandlers. Spannungsversatz und kleine Störungen führen zu keiner Beeinflussung des Messwertes. Die Leitungslängen sind somit deutlich unkritischer.

Wird eine Untereinheit gebildet, was bei einer größeren Zahl von Sensoreinheiten sinnvoll ist, können zum Beispiel acht Sensor-Multivibratoren angesteuert, einzeln gemessen und zusammengefasst auf eine gemeinsame Untereinheitenschnittstelle ausgegeben werden. Dies kann vorzugsweise ein serielles Bussystem sein, das den Verdrahtungsaufwand deutlich in Grenzen hält. Die Untereinheiten erfassen im einfachsten Fall zyklisch oder auch auf Anforderung die Werte der Spulenoszillatoren und stellen diese über das Busprotokoll zur weiteren Beurteilung zur Verfügung. Diese Untereinheit kann im flexibelsten Fall mit Hilfe eines Mikrocontrollers aufgebaut sein.

Die Untereinheit kann die zugeordneten Sensormesswerte auch bewerten und/oder filtern. So können die einzelnen Messwerte untereinander verglichen und überwacht werden. Aufgrund der Tatsache, dass die einzelnen Kanäle Toleranzen unterliegen, ist hier eine relative Betrachtung der Änderung von besonderem Interesse. So wirkt zum Beispiel eine Temperaturänderung auf alle Einzelsensoren im gleichen Maß. Verändert also eine Messstelle den Wert nicht im Verhältnis der anderen Sensoren, kann eine Störung an dieser Stelle geschlossen werden. Besonders vorteilhaft ist, wenn diese Bewertung in einem Zustand durchgeführt wird, wo bekanntermaßen alle Messwerte denselben Wert annehmen müssen. Dies ist beispielsweise der Fall, wenn alle Nadeln vollständig aus der Spule herausgezogen sind (Zeitpunkt T₀ in Figur 2), oder vollständig durch die Spulen hindurchgetaucht sind (Zeitpunkt T₄ in Figur 2). Da in dieser Stellung eine einzelne beschädigte Nadelspitze den Messwert nicht beeinflusst, kann der Messwert zur Bestimmung des Störeinflusses, beispielsweise durch die Temperatur, verwendet werden. Damit kann der Störeinfluss auf die Einzelmesswerte kompensiert werden.

Aufgrund dieser Tatsache kann eine differentielle Bewertung der Einzelmessungen in einer Untereinheit oder in einer zentralen Einheit erfolgen und muss nicht an jedem einzelnen Messkanal messtechnisch gebildet werden. Weiter kann in den Untereinheiten auch die für die Sensoreinheiten nötige Versorgungsspannung zur Verfügung gestellt und aufbereitet werden, um mögliche Störeinflüsse aufgrund der Leitungslänge zu unterdrücken.

Aus Sicht einer zentralen Einheit zur Beurteilung der Einzelmesswerte ergibt sich ein Bild aus einzelnen Pixeln an den jeweiligen Messstellen der Spulen. Hier können nun die Bewertungsfunktionalitäten und Messwertaufbereitung der gesamten Sensormatrix durchgeführt werden. Die Vergleiche der einzelnen Messstellen können die Qualität der Aussagen deutlich erhöhen. So zeigt gerade der Verlauf einer einzelnen oder weniger Messstellen im Vergleich zu mehreren oder allen anderen einen abnormalen Messwertverlauf und damit einen Hinweis auf Veränderung des Messobjektes. Dies kann beispielsweise eine erhöhte Abnutzung, eine gebogene Spitze oder ein verstopfter Nadelkanal sein. Der Vergleich mit den vielen anderen Messstellen erlaubt es, statt auf statische vielmehr auf statistisch nachgeführte Grenzen reagieren zu können und damit Falschmeldungen in der Anwendung beim Endkunden zu vermeiden.

Die zentrale Einheit kann die bewerteten oder aufbereiteten Messwerte an eine Steuereinheit weitergeben, die Maßnahmen wie eine Warnmeldung, Anlagenstopp oder Markierung des bearbeiteten Gutes zum Beispiel vornimmt. Die Steuereinheit kann dabei auch gleichzeitig die beschriebene Rolle der zentralen Einheit einnehmen und direkt mit den Untereinheiten kommunizieren bzw. von dort die Messwerte abholen. Bei geringer Anzahl der Messstellen können diese entsprechend den voranstehenden Ausführung auch direkt mit der Steuereinheit verbunden sein.

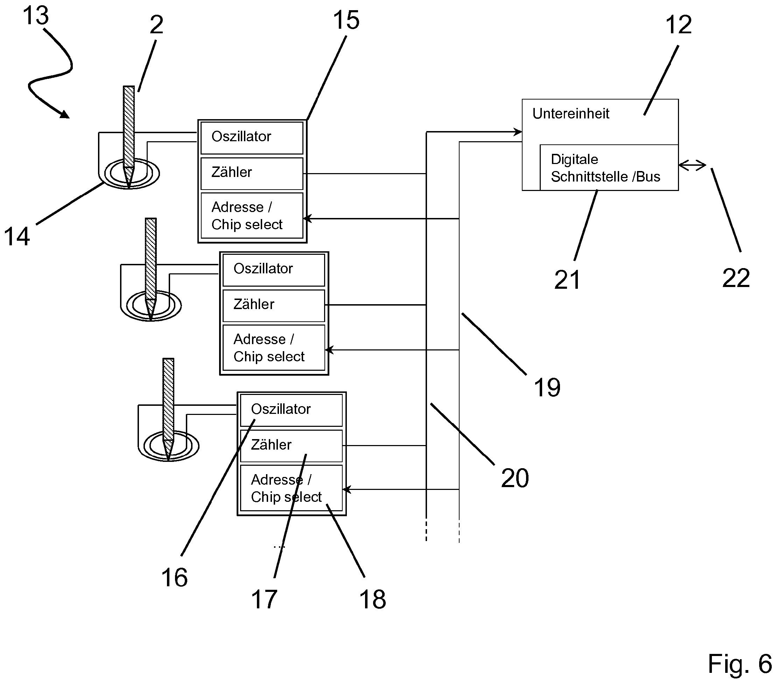

Figur 6 zeigt die beispielhafte Anordnung einer Untereinheit, wobei Versorgungsleitungen nicht eingezeichnet sind.

Eine Untereinheit 12 steuert eine Gruppe 13 von drei Spulen 8 an. Diese sind als Flachspule 14 auf einer nicht gezeigten Leiterplatte angeordnet. Jeder Spule ist eine Ansteuerschaltung 15 zugeordnet, die aus einem Oszillator 16, einem Zähler 17 und einem Adressierer 18 besteht. Die Ansteuerschaltung ist - neben wenigen passiven Bausteinen wie Kondensatoren oder Widerständen - vollständig aus Logikbausteinen aufgebaut. Über den Adressierer 18 kann jede Ansteuerschaltung individuell von der Untereinheit über die Adressleitung 19 angesteuert werden. Das Ausgangssignal wird vom Zähler über die Signalleitung 20 an die Untereinheit 12 übertragen. Die Untereinheit kommuniziert mit der nicht gezeigten zentralen Einheit mittels einer digitalen Schnittstelle 21 über eine Busleitung 22.

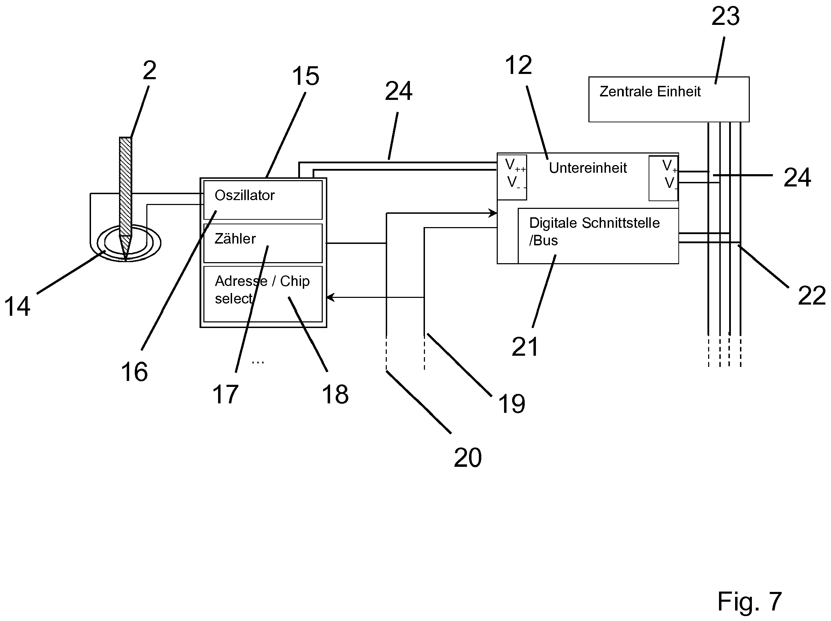

Figur 7 zeigt die beispielhafte Anordnung von Untereinheit und zentraler Einheit 23 inklusive der Versorgungsleitungen 24.

Bei einer geringen Anzahl von Nadeln oder auch bei erhöhten Einfluss von ungleichmäßigen Störungen auf die Spulenmatrix durch Temperatur oder ähnlichem kann eine vergleichende Messung erschwert sein. Zusätzlich kann eine Anordnung gewählt werden, wo die Nadel durch zwei übereinander angeordneten Spulen hindurchfährt. Dabei sollte die erste Spule so angeordnet sein, dass diese den zu erwartenden Einfluss misst und die zweite Spule in einem Bereich der Nadel misst, in dem zum Beispiel kein Bruch zu erwarten ist. Der oben beschriebene Schaltungsansatz kann weiterhin verwendet werden und wird lediglich um einen Schalter bzw. einen umschaltbaren Multivibrator erweitert. Im einfachsten Fall wird dies in der programmierbaren Logik über zwei Pins realisiert, die abwechselnd ein/aus bzw. hochohmig und niederohmig geschaltet werden und daran lediglich jeweils eine Spulenseite der zwei Spulen an den Multivibrator angeschaltet ist.

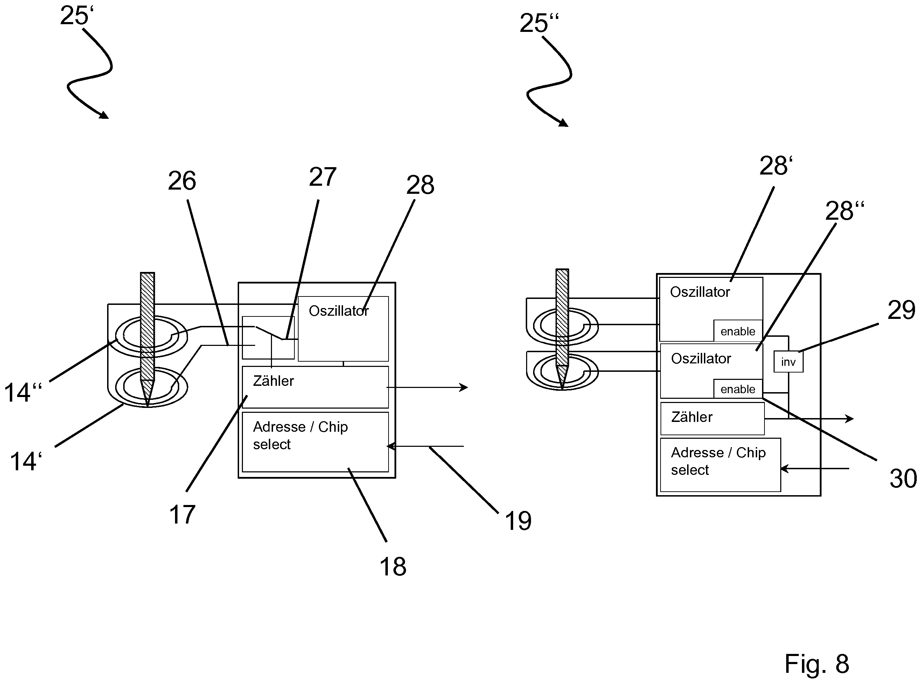

Figur 8 zeigt ein Blockschaltbild 25', 25" einen jeweils nicht verwendeten Spulenanschluss 26 der Einzelspulen 14', 14" und einen gemeinsamen Anschluss 27, der mit dem Multivibrator 28 verbunden ist. Für den Fall dass ein weiterer Multivibrator 28" oder allgemein Oszillator 16 verwendet wird, sind entsprechend weitere Anschlüsse vorzusehen.

Das Umschalten zwischen den beiden Spulen 14 oder auch zwischen zwei Oszillatoren 16 kann über einen zusätzlichen Eingang, oder bevorzugt durch die interne Schaltlogik 29 erfolgen, die zusammen mit dem vorgeschlagenen Zähler ermöglicht, dass zum Beispiel bei über die Adressleitungen oder den genannten "Enable"-Pin 30 der entsprechende Schaltkreis startet und bei Erreichen des festgelegten Zählerstandes automatisch den Spulenanschluss oder den Multivibrator wechselt. Am Ausgang entspricht dann beispielsweise die Zeit während des High-Pegels dem Messsignal der ersten Spule und die Zeit des Low-Pegels dem Messsignal der zweiten Spule. Dies wird fortgesetzt bis der Schaltkreis nicht mehr ausgewählt ist. Auch diese Lösung erfüllt alle genannten Vorteile und erweitert die Möglichkeiten für die Bewertung an einer Nadel.

Um den Verdrahtungsaufwand bei der Integration zu minimieren und den Herstellprozess zu optimieren, ist es sinnvoll, die Messspulen in Leiterplattentechnik herzustellen. Es können mehrere Messstellen zu der oben erwähnten Untereinheit zusammengefasst und auf einem gemeinsamen Board umgesetzt werden. In diesem Fall beschränkt sich der Verdrahtungsaufwand auf die Verbindung der Untereinheiten, damit diese versorgt werden und über eine gemeinsame Schnittstelle die Messwerte weitergeben werden können. Wird der verarbeitende Teil der Untereinheit von dem Spulenarray abgesetzt aufgebaut, ist eine weitere Verbindungseinheit zur Herstellung des Messsystems nötig. Dafür würden aber die spezifischen Spulenstrukturen günstiger und flexibler verwendet werden können.

Die Messspulen in Leiterplattentechnik herzustellen bedeutet aber auch, dass die mechanischen Abmessungen der Leiterplatte jeweils an die gewünschte Nadelanordnung angepasst werden müssen. Dies führt unweigerlich zu großer Variantenvielfalt der Sensorleiterplatten und damit zu zusätzlichen Kosten und Aufwände in der Auftragsabwicklung Um diese Variantenvielfalt zu begrenzen, ist eine anpassungsfähige Ausführung bei der Gestaltung der Leiterplatte mit den Messspulen entwickelt worden.

Die Nadeln werden üblicherweise in einer Matrix aus Zeilen und Spalten angeordnet. Hierbei sind benachbarte Zeilen zumeist um den halben Spaltenabstand versetzt zueinander angeordnet. Es können daher streifenförmige Spulenarrays, die zum Beispiel die oben genannten Untereinheiten bilden, in den Zeilen verwendet werden, wobei bei benachbarten Streifen die Nadeln jeweils entsprechend versetzt angeordnet sind. Um nun die große Anzahl an unterschiedlichen Spaltenabständen mit gleichen Spulenarrays vermessen zu können, müssen die Einzelspulen des Streifens flexibel miteinander verbunden sein. Die Länge des flexiblen Bereichs ergibt sich aus dem maximal möglichen Spaltenabstand.

Die flexible Verbindung kann zum einen diskret mit Litzen oder Flachbandleitungen erfolgen, in einer bevorzugten Ausführung wird das streifenförmige Spulenarray als starr-flexible Leiterplatte ausgeführt, wobei die Spulen inklusive Oszillatoreinheit jeweils in den starren Bereichen angeordnet sind. Dadurch ist eine gute mechanische Positionierung in Bezug auf die Nadeln möglich. Gleichzeitig kann der Abstand der Nadeln variieren, ohne das Layout des Spulenarrays anpassen zu müssen. Der flexible Bereich des Spulenarrays kann bei kleiner werdendem Abstand der Nadeln bogenförmig eingelegt werden. Weiterer Vorteil der starr-flexiblen Anordnung ist die Unempfindlichkeit der Anordnung gegen starke Durchbiegungen des Niederhalters, in den das Array üblicherweise eingegossen ist. Bei starren Leiterplatten kann dies zu Unterbrechungen in den Leiterbahnen oder zu Beschädigungen der bestückten Bauteile führen. Die flexiblen Bereiche verhindern hingegen zu große Spannungen in den starren Bereichen.

Aufgrund der gewählten Geometrie und Technologie können die einzelnen Spulen je nach Stich- bzw. Bohrbild flexibel eingesetzt werden. Der Verdrahtungsaufwand ist stark reduziert und die Flexibilität für die Anpassung an spezifische geometrische Anforderungen ist groß.

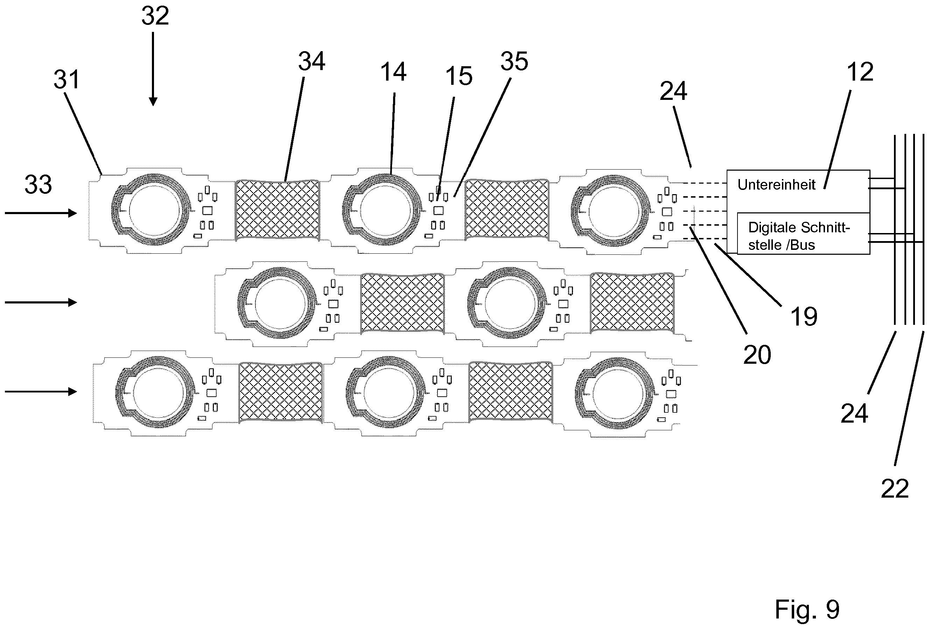

Figur 9 zeigt beispielhaft einen Ausschnitt von streifenförmigen Spulenarrays 31, die je nach Lochabstand sowohl senkrecht (Spalte 32), als auch waagrecht (Zeile 33) auf den tatsächlichen Lochabstand montiert werden können, ohne eine Modifikation an den streifenförmigen Spulenarrays vornehmen zu müssen. Jeweils schraffiert dargestellt ist der flexible Bereich 34 der Streifen zwischen den Spulen 14. Neben den Spulen ist die Auswerteschaltung 15 auf der Leiterplatte 35 bestückt. In diesem Beispiel ist der flexible Bereich nahezu gestreckt für eine Anordnung, wo die Nadeln weit auseinander angebracht sind. Die Untereinheit 12 zur Versorgung und Ansteuerung der Auswerteschaltungen sitzt an einer Seite des Streifens und kommuniziert mit der zentralen Einheit. Im Beispiel nach Figur 9 sind drei Messstellen 8 gezeigt, wobei die Anzahl der Messstellen nebeneinander von der Anzahl der Nadeln abhängt.

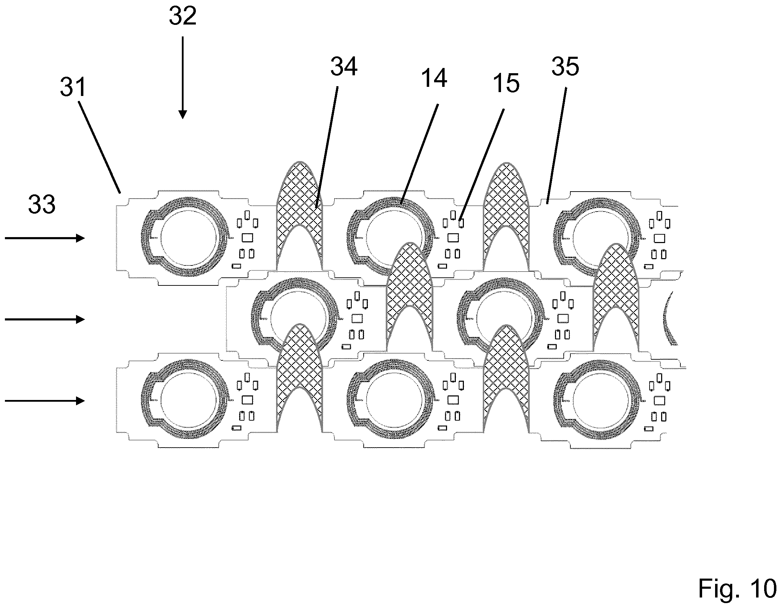

Figur 10 zeigt eine Anordnung, wo die Nadeln sehr nahe beieinander stehen. Dadurch müssen auch die Spulen 14 nahe aneinanderrücken. Innerhalb einer Zeile 33, d.h. eines streifenförmigen Spulenarrays, geschieht dies durch eine bogenförmig nach oben gewölbte Verlegung des flexiblen Bereichs 34. Damit die einzelnen Streifen nahe aneinanderrücken können, sind diese an der Stelle des flexiblen Bereiches tailliert 36 ausgeführt. Dies ist leicht möglich, da innerhalb der flexiblen Leiterbahn nur wenige Leitungen geführt werden. Im Vergleich zur Spule kann damit eine geringe Breite erreicht werden, so dass sich die Streifen nahe nebeneinander verlegen lassen. Durch den flexiblen Teil zwischen den Einzelspulen in einer Zeile wird die nötige Variationsmöglichkeit in die eine und durch die Taillierung 36 des flexiblen Teils der Anordnung die Variationsmöglichkeit in die andere Richtung erreicht. So können die Spulen 14 versetzt sehr nahe angeordnet werden.

Um die Impedanz der verwendeten Sensorspule möglichst zu erhöhen und so die Oszillatorfrequenz zu verringern, ist eine hohe Kupferlagenzahl der verwendeten Leiterplatte im starren Bereich anzustreben (zum Beispiel 8- lagige Leiterplatte). Dies erhöht jedoch die Kosten dieser Leiterplatte deutlich. Schaltet man eine oder mehrere weitere Spule(n) in Reihe zur Sensorspule und bindet diese über weitere flexible Bereiche an, können diese Spule(n) koaxial zur Ersten angeordnet werden.

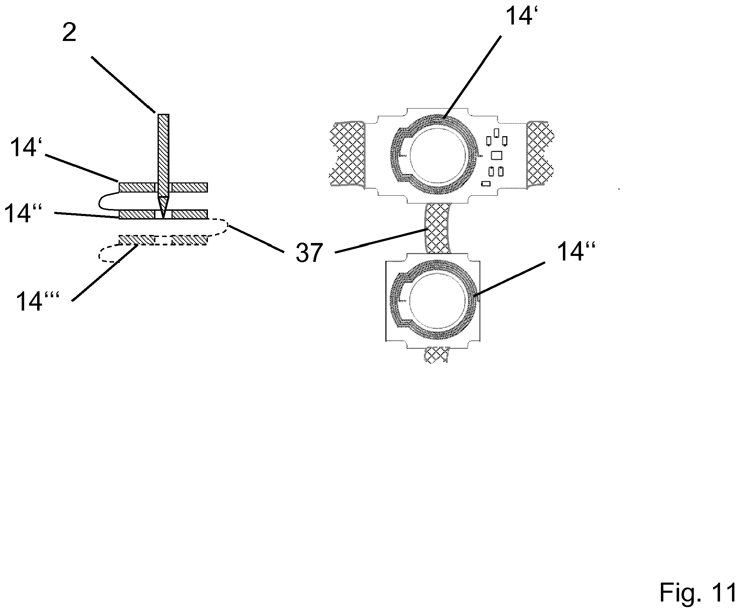

Figur 11 zeigt eine solche Anordnung seitlich und in Draufsicht. Die Spule kann in zwei oder mehrere Teilspulen 14', 14", 14'" aufgeteilt werden, die mit Hilfe eines weiteren flexiblen Bereiches 37 konzentrisch übereinander angeordnet werden. Durch diese Anordnung kann entweder die Lagenzahl bei gleichbleibender Impedanz reduziert werden, oder aber die Impedanz bei gleichbleibender Lagenzahl erhöht werden. Als weiterer Vorteil kann die Erhöhung der Auflösung in axialer Richtung gesehen werden, da sich das Feld der Gesamtspule über eine größere axiale Länge erstreckt.

Bei zwei in Reihe geschalteten Spulen kann in einer bevorzugten Variante ein Helmholtz-Spulen-Paar aufgebaut werden, wodurch sich ein annähernd homogenes Feld zwischen den beiden Spulen ergibt. Ein Eintauchen der Nadelspitze in dieses Spulenpaar bewirkt eine annähernd lineare Veränderung des Ausgangssignals bezüglich der Eintauchtiefe.

Alternativ könnte auch ein transformatorisches Prinzip mit Sende- und Empfangsspule gewählt werden. Eine Spule wird mit einer Wechselspannung beaufschlagt. Über die Nadel koppelt das elektromagnetische Feld in die zweite Spule. Die Kopplung wird reduziert, wenn die Nadel einen Defekt, beispielsweise eine abgebrochen Spitze, aufweist, wodurch das Signal in der Empfangsspule abnimmt.

Eine weitere Alternative ist die Verwendung von zwei Spulen in Halbbrückenanordnung oder drei Spulen als LVDT.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

### Bezugszeichenliste

- 1: Injektionsvorrichtung
- 2: Nadel
- 3: Niederhalter
- 4: Öffnungen
- 5: Bewegungsvorrichtung
- 6: untere Hälfte der Figur
- 7: obere Hälfte der Figur
- 8': Spulen
- 8": Spulen
- 8'": Spulen
- 8"": Spulen
- 8'"": Spulen
- 9: Nadelspitze
- 10: durchgezogene Kurve
- 11: gepunktete Kurve
- 12: Untereinheit
- 13: Gruppe von drei Spulen
- 14: Flachspule auf einer Leiterplatte
- 14': Einzelspule
- 14": Einzelspule
- 15: Ansteuerschaltung
- 16: Oszillator
- 17: Zähler
- 18: Adressierer
- 19: Adessleitung
- 20: Signalleitung
- 21: Schnittstelle
- 22: Busleitung
- 23: zentrale Einheit
- 24: Versorgungsleitung
- 25': Blockschaltbild
- 25": Blockschaltbild
- 26: Spulenanschluss
- 27: Anschluss
- 28: Multivibrator
- 29: Schaltlogik
- 30: "Enable"-Pin
- 31: Spulenarray
- 32: Spalte
- 33: Zeile
- 34: flexibler Bereich der Streifen
- 35: Leiterplatte
- 36: flexibler Bereich der Streifen, tailliert

## Patentansprüche

1. Verfahren zum Erkennen von Defekten oder Längenänderungen an einem nadelförmigen oder nadelähnlichen Messobjekt, insbesondere an Nadeln in einer mehrere Nadeln umfassenden Anordnung, vorzugsweise an Nadeln in Pökelinjektoren,
wobei die Messobjekte während einer Relativbewegung zwischen den Messobjekten und Sensoren kontaktlos überprüft werden und wobei die Sensoren als Spulen oder Spulenanordnungen ausgeführt sind,
**dadurch gekennzeichnet, dass** der Überprüfung Messsignale zugrunde gelegt werden, die aus einer im Bewegungsablauf auftretenden Änderung der Spuleneigenschaft resultieren, wobei der Bewegungsablauf zwischen Messobjekt und Sensor stetig oder unstetig sein kann.

2. Verfahren nach Anspruch 1, **dadurch gekennzeichnet, dass** der Überprüfung ein Vergleich der jeweils aktuellen Messsignale mit Messsignalen aus vorangegangenen Messungen als weiteres Bewertungskriterium zugrunde gelegt wird.

3. Verfahren nach Anspruch 1 oder 2, wobei die Messobjekte zu mehreren gleichzeitig und vorzugsweise gleichförmig bewegt werden, **dadurch gekennzeichnet, dass** die Spulenanordnung derart ausgestaltet und angeordnet ist, dass jedes Messobjekt an der Spulenanordnung vorbei oder durch die Spulenanordnung hindurch geführt wird, solange, bis ein zu erwartender Defekt oder das freie Ende bzw. die Spitze des Messobjekts im Messbereich der jeweiligen Spule oder Spulenanordnung liegt.

4. Verfahren nach einem der Ansprüche 1 bis 3, **dadurch gekennzeichnet, dass** über eine elektrische/elektronische Schaltung die Spuleneigenschaften, beispielsweise die Induktivität oder der elektrische Widerstand, auf eine messbare Größe abgebildet und einer weiteren Verarbeitung zugeführt wird, und/oder dass der zeitliche Verlauf von Einzelmessungen direkt miteinander verglichen wird, wobei aus Abweichungen der Messsignale einer oder weniger Messstellen zu einer Mehrzahl der anderen Messstellen ein Defekt abgeleitet wird.

5. Verfahren nach einem der Ansprüche 1 bis 4, **dadurch gekennzeichnet, dass** der sich aus den Messsignalen ergebende Kennlinienverlauf in einem für alle Messungen geltenden Zeitfenster, vorzugsweise mit gleicher Anzahl von Messwerten pro Messpunkt, einer vergleichenden Bewertung vorzugsweise über Vergleichsoperationen zugeführt wird, so dass eine nachfolgende Wertung oder Aktion laufzeitunabhängig ist, und/oder dass in Kenntnis der Position eines möglichen Defekts oder der Zeit, nach der die Messwerte des Defekts zu erwarten sind, die Anzahl der Messpunkte während der Bewegung verringert werden, wobei eine Reduktion der vergleichenden Betrachtung auf einen einzigen Messpunkt reduziert werden kann, wenn die Messung im Bereich des erwarteten Defekts durchgeführt wird und wenn ggf. ein zusätzlicher Vergleich der Messwerte mit vorangegangenen Messungen, an gleicher Messstelle, erfolgt und/oder dass bei mehreren Messstellen die Sensoren oder Sensoreinheiten gleichzeitig oder in Gruppen betrieben werden, wobei die jeweiligen Ausgänge über einen Multiplexer vorzugsweise umschaltbar einer Steuereinheit oder einer zentralen Auswerteeinheit zur Verfügung gestellt werden.

6. Verfahren nach einem der Ansprüche 1 bis 5, **dadurch gekennzeichnet, dass** die Sensoren oder Sensoreinheiten gleichzeitig oder in Gruppen betrieben werden.

7. Verfahren nach einem der Ansprüche 1 bis 6, **dadurch gekennzeichnet, dass** die Sensoren oder Sensoreinheiten einzeln oder gemeinsam mit Wechselstrom betrieben werden, wobei ein sich aufgrund des Messobjekts ändernder Spannungsabfall über einen Multiplexer ggf. zu einer Untereinheit geführt und von dort vorzugsweise über einen AD-Wandler als Messwert zur weiteren Verarbeitung bereitgestellt wird.

8. Verfahren nach einem der Ansprüche 1 bis 7, **dadurch gekennzeichnet, dass** eine Ansteuerschaltung zum Ein- und Ausschalten bzw. Multiplexen der Messstellen vorgesehen ist, die einen Multivibrator umfasst, dessen bestimmende Zeitkonstante in erster Linie durch die Spule und einen Widerstand gebildet ist, wobei der Multivibrator aus einfachen Logikbausteinen aufgebaut sein kann.

9. Vorrichtung zum Erkennen von Defekten oder Längenänderungen an einem nadelförmigen oder nadelähnlichen Messobjekt, insbesondere an Nadeln in einer mehrere Nadeln umfassenden Anordnung, vorzugsweise an Nadeln in Pökelinjektoren,
wobei die Messobjekte während einer Relativbewegung zwischen den Messobjekten und Sensoren kontaktlos überprüft werden und wobei die Sensoren als Spulen oder Spulenanordnungen ausgeführt sind, insbesondere zur Anwendung des Verfahrens nach einem der Ansprüche 1 bis 8,
**dadurch gekennzeichnet, dass** der Überprüfung Messsignale zugrunde gelegt werden, die aus einer im Bewegungsablauf auftretenden Änderung der Spuleneigenschaft resultieren, wobei zur Messung an einem Messobjekt eine, zwei oder mehrere Spulen vorgesehen sind.

10. Vorrichtung nach Anspruch 9, **dadurch gekennzeichnet, dass** die Spulen als Flachspulen ausgeführt sind, die auf einer Leiterplatte angeordnet sind, wobei jeder Spule eine einen Oszillator, einen Zähler und einen Adressierer umfassende Ansteuerschaltung zugeordnet sein kann und wobei die Ansteuerschaltung über den Adressierer individuelle von einer Untereinheit über eine Adressleitung angesteuert werden kann, wobei die Aufbereitung der Sensorsignale in unmittelbarer Umgebung der Spulen erfolgen kann, wobei das Ausgangssignal der Spulen über eine Signalleitung ggf. an die Untereinheit übertragen werden kann und/oder wobei die Untereinheit mittels digitaler Schnittstelle über eine Busleitung mit einer zentralen Einheit kommunizieren kann und/oder wobei die Spulen in Leiterplattentechnik hergestellt und entsprechend auf einer oder mehreren Leiterplatten angeordnet sein kann.

11. Leiterplatte als Bestandteil einer Vorrichtung zum Erkennen von Defekten oder Längenänderungen an einem nadelförmigen oder nadelähnlichen Messobjekt, insbesondere an Nadeln in einer mehrere Nadeln umfassenden Anordnung, vorzugsweise an Nadeln in Pökelinjektoren, wobei die Messobjekte während einer Relativbewegung zwischen den Messobjekten und einer Spule oder mehrerer Spulen kontaktlos überprüft werden und wobei der Überprüfung Messsignale zugrunde gelegt werden, die aus einer im Bewegungsablauf auftretenden Änderung der Spuleneigenschaft resultieren, insbesondere zur Anwendung des Verfahrens nach einem der Ansprüche 1 bis 10,
**dadurch gekennzeichnet, dass** die Spule(n) in die Leiterplatte integriert ist/sind.

12. Leiterplatte nach Anspruch 11, **dadurch gekennzeichnet, dass** mehrere Spulen auf einer gemeinsamen Leiterplatte zu einer Untereinheit mit gemeinsamer Schnittstelle zur Weitergabe der Messwerte zusammengefasst sind.

13. Leiterplatte nach Anspruch 11 oder 12, zur Anwendung in einer Anordnung mit mehreren Messobjekten, insbesondere bei Nadeln in Pökelinjektoren, **dadurch gekennzeichnet, dass** die mechanischen Abmessungen der Leiterplatte der konkreten Messobjektanordnung/Nadelanordnung angepasst ist, wobei bei matrixartiger Anordnung der Messobjekte/Nadeln in Zeilen und Spalten streifenförmige Spulenarrays vorzugsweise im Sinne einer Untereinheit ausgebildet sein kann.

14. Leiterplatte nach Anspruch 13, **dadurch gekennzeichnet, dass** die einzelnen Spulen und weitere elektronische Bauteile wie Oszillator, Auswerteschaltung etc. jeweils einem festen oder starren Leiterplattenabschnitt zugeordnet sind und dass die festen/starren Leiterplattenabschnitte über flexible/biegbare Leiterplattenabschnitte mechanisch und elektrisch miteinander verbunden sind, wobei die flexiblen Leiterplattenabschnitte zum Positionieren durch Zusammenschieben oder Falten dienen, wodurch sich eine Anpassung der Spulenposition an die jeweils vorgegebene Anordnung der Messobjekte/Nadeln ergibt, wobei der flexible/biegbare Leiterplattenabschnitt diskret durch Litzen oder Flachbandleitungen aufgebaut sein kann.

15. Leiterplatte nach Anspruch 14, **dadurch gekennzeichnet, dass** die Leiterplatten breitere feste/starre Leiterplattenabschnitte und schmalere flexible/ biegbare Leiterplattenabschnitte aufweist, so dass bei geringem Zeilenabstand und Versatz der Messobjekte/Nadeln benachbarter Zeilen von Messobjekten/Nadeln ein geringstmöglicher Abstand zwischen den Spulenarrays zur Anpassung an die Position der Messobjekte/Nadeln realisierbar ist und/oder dass die Spule durch zwei oder mehrere Teilspulen gebildet ist, die über einen weiteren flexiblen Bereich vorzugsweise seitlich, d.h. quer zur Längsrichtung des Spulenarrays, verbunden sind und dadurch zur Bildung der Gesamtspule konzentrisch aufeinander faltbar oder legbar sind.
